(19) Europäisches Patentamt
European Patent Office
Office européen des brevets

(11) Veröffentlichungsnummer: **0 459 257 B1**

(12) # EUROPÄISCHE PATENTSCHRIFT

(45) Veröffentlichungstag der Patentschrift: **12.04.95**

(51) Int. Cl.$^{6}$: **C08F 283/12**, C08L 75/04

(21) Anmeldenummer: **91108083.6**

(22) Anmeldetag: **18.05.91**

(54) **Thermoplastische, flexible Polyurethan-Zusammensetzungen und Verfahren zu ihrer Herstellung.**

(30) Priorität: **31.05.90 DE 4017571**

(43) Veröffentlichungstag der Anmeldung:
**04.12.91 Patentblatt 91/49**

(45) Bekanntmachung des Hinweises auf die Patenterteilung:
**12.04.95 Patentblatt 95/15**

(84) Benannte Vertragsstaaten:
**DE FR GB IT**

(56) Entgegenhaltungen:
**EP-A- 0 012 416** **EP-A- 0 246 537**
**EP-A- 0 260 558** **EP-A- 0 370 347**
**EP-A- 0 387 590** **EP-A- 0 420 016**

(73) Patentinhaber: **BAYER AG**
**D-51368 Leverkusen (DE)**

(72) Erfinder: **Lindner, Christian, Dr.**
**Im Wasserblech 11**
**W-5000 Köln 80 (DE)**
Erfinder: **Orthmann, Ernst, Dr.**
**Moltkestrasse 13**
**W-4047 Dormagen (DE)**
Erfinder: **Piejko, Karl-Erwin, Dr.**
**Unterscheider Weg 7a**
**W-5060 Bergisch Gladbach 2 (DE)**

EP 0 459 257 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue thermoplastische, flexible Zusammensetzungen auf Polyurethan-Basis und Verfahren zu ihrer Herstellung.

Thermoplastische Polyurethane benötigen für diverse anwendungstechnische Einsatzgebiete verbesserte mechanische Gebrauchseigenschaften neben gutem Alterungsverhalten und hoher Verarbeitungsstabilität. Verbesserte Schlagzähigkeiten von Polyurethanen kann man dann erreichen, wenn man den Polyurethanen Dienkautschukpfropfpolymerisate zumischt (siehe dazu GB-A-2 021 600, EP-A-12 416, DE-A 28 54 407).

Durch die Anwesenheit der Dienkautschuke ist allerdings die Alterungsstabilität und Verarbeitungsstabilität der Polyurethane nachteilig beeinflußt, insbesondere bei den Formmassen, bei denen man versucht, höhere Gehalte an Pfropfkautschuk einzusetzen (um z. B. eine bestimmte

Weichheit oder Elastizität einzustellen). Mit zunehmender Dienkautschukdosierung wird gerade der nachteilige Effekt auf das Alterungsverhalten besonders deutlich.

EP-A-0 387 590 offenbart schlagzäh modifizierte thermoplastische Polyurethan-Formmassen enthaltend 1-30 Gew-Teilen eines Pfropfpolymerisats (B) mit einer Pfropfgrundlage bestehend aus einen Copolymerisat aus Butadien-1,3 und (Meth)acrylsäurealkylestern mit 1 bis 8 C-atom im Alkylrest.

Aufgabe der Erfindung war es, die mechanischen Eigenschaften und die Alterungsstabilität zu verbessern.

Gegenstand der Erfindung sind thermoplastische, flexible Zusammensetzungen aus

A) wenigstens einem thermoplastischen Polyurethan und

B) wenigstens einem partiell vernetztem Pfropfkautschuk auf Basis

B.1) eines Acrylatkautschuks mit Kern/Mantel-Struktur, wobei der Acrylatkautschuk aus einem Kern aus Polybutadien, einer Hülle aus Acrylatkautschuk und wenigstens einem aufgepfropften Vinylmonomeren besteht und/oder

B.2) eines Silikonkautschuks.

Es resultieren Zusammensetzungen mit hohem mechanischen Eigenschaftsniveau und guter Alterungsstabilität, die sich hervorragend für thermoplastische, flexible Formmassen eignen. Das mechanische Niveau und die Stabilitätseigenschaften bleiben auch dann erhalten, wenn man dem Polyurethan relativ hohe Gehalte an Pfropfpolymerisate zumischt. Die Hydrolysestabilität der Formmassen ist gegenüber Formmassen aus PU und Dienpfropfkautschuken überraschend verbessert.

Besonders hochwertige Polyurethan-Zusammensetzungen sind dann zugänglich, wenn der Pfropfkautschuk B) einen teilchenförmigen Kautschuk vom Kern/Mantel-Typ aus einem Silikonkautschukkern und einem Acrylatkautschukmantel enthält, wobei das Gew.-Verhältnis von Kern/Mantel im Bereich von 90:10 - 50:50, insbesondere 80:20 - 60:40 Gew.-% liegt.

Besonders geeignete Pfropfkautschuke B im Sinne der Erfindung besitzen aufgepfropftes Homo- oder Co-Polymerisat aus der Reihe von Vinylmonomeren wie Styrol, $\alpha$-Methylstyrol, Acrylnitril, $C_1$-$C_6$-Alkylmethacrylat, $C_1$-$C_6$-Alkylacrylat oder $C_1$-$C_3$-Carbonsäurevinylester, insbesondere Styrol, Acrylnitril, Methylmethacrylat, Vinylacetat, insbesondere bevorzugt Styrol, Acrylnitril.

Die thermoplastischen Polyurethane A sind an sich bekannt und werden nach Verfahren des Standes der Technik hergestellt. Sie sind im allgemeinen aus langkettigen Polyolen vom Molekulargewicht 400 - 10.000, Diisocynaten und Kettenverlängerungsmitteln (vorzugsweise kurzkettigen Polyolen) vom Molekulargewicht bis zu 400 aufgebaut, wobei das NCO/OH-Verhältnis in der Regel bei 0,95 bis 1,10 liegt.

Als im wesentlichen lineare Polyole mit Molekulargewichten zwischen 400 und 10.000, bevorzugt zwischen 800 und 6.000, kommen erfindungsgemäß praktisch alle an sich bekannten, vorzugsweise 2, gegebenenfalls - in untergeordneten Mengen - auch 3, zerewitinoffaktive Gruppen (im wesentlichen Hydroxylgruppen) enhaltenden Polyester, Polylactone, Polyether, Polythioether, Polyesteramide, Polycarbonate, Polyacetale, Vinylpolymere wie z.B. Polybutadiendiolen, bereits Urethan- oder Harnstoffgruppen enthaltende Polyhydroxylverbindungen, gegebenenfalls modifizierte natürliche Polyole, sowie auch andere zerewitininoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben. Erfindungsgemäß bevorzugt sind hydroxylgruppenhaltige Polyester aus Glykolen bzw. Adipinsäure, Phthal- und/oder Terephthalsäure sowie deren Hydrierungsprodukten, Hydroxylpolycarbonate, Polycaprolactone, Polyethylenoxid, Polypropylenoxid, Polytetrahydrofuran und Mischpolyether und Ethylenoxid und Propylenoxid.

Erfindungsgemäß zu verwendende Diisocyanate sind die an sich bekannten aliphatischen, cycloaliphatischen, aromatischen, araliphatischen und heterocyclischen Diisocyanate des Standes der Technik, wie sie

z.B. in den bereits genannten DE-Offenlegungsschriften 23 02 564, 24 23 764, 25 49 372, 24 02 840 und 24 57 387 beschrieben sind; bevorzugte Diisocyanate sind gegebenenfalls durch Methylgruppen substituiertes Hexamethylendiisocyanat, Isophorondiisocyanat und 4,4'-Diisocyanatodiphenylmethan.

Die genannten Diisocyanate können gegebenenfalls zusammen mit bis zu ca. 15 Mol-% (bezogen auf Diisocyanat) eines höherfunktionellen Polyisocyanats eingesetzt werden; die Menge des höherfunktionellen Polyisocyanats muß jedoch so begrenzt werden, daß ein noch schmelzbares bzw. thermoplastisches Produkt erhalten wird. Eine größere Menge an höherfunktionellen Isocyanaten muß im allgemeinen durch die Mitverwendung von im Durchschnitt weniger als difunktionellen Hydroxyl bzw. Aminoverbindungen (bzw. auch von Monoisocyanaten) ausgeglichen werden, so daß eine zu weit gehende chemische Vernetzung des Produkts vermieden wird. Es ist aber selbstverständlich auch möglich, die Reaktion so zu führen, daß eine nachträgliche chemische Vernetzung des Elastomeren während der Lagerung eintritt (z.B. durch Verwendung eines Überschusses an NCO-Gruppen enthaltenden Verbindungen). Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidon, Piperidin und Cyclohexylamin sowie Monoalkohole wie Butanol, 1-Ethylhexanol, Octanol, Dodecanol, Amylalkohole, Cyclohexanol und Ethylenglykolmomoethylether erwähnt.

Auch die erfindungsgemäß einzusetzenden Kettenverlängerungsmittel sind an sich bekannt und z.B. in den DE-Offenlegungsschriften 23 02 564, 24 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Ethanolamin, Diethanolamin, N-Methyldiethanolamin, Triethanolamin und 3-Aminopropanol kommen erfindungsgemäß in Frage. Bevorzugte Kettenverlängerungsmittel sind Ethylenglykol, Di- und Triethylenglykol, 1,2-Propandiol, 1,3- und 1,4-Butandiol, 1,6-Hexandiol, 2-Ethylhexandiol-(1,3), 2,2-Dimethylpropandiol, 1,4-Bis-hydroxy-methylcyclohexan und Hydrochinondihydroxyethylether. Besonders bevorzugt sind Hydrochinondi-$\beta$-hydroxyethylether, 1,4-Butandiol und 1,6-Hexandiol.

Die zur Erzeugung der erfindungsgemäßen Formmassen verwendeten Pfropfprodukte B.1 auf Bais von Acrylatkautschuk werden erhalten, indem Vinylmonomere oder Vinylmonomergemische in Gegenwart von Acrylatkautschuk radikalisch polymerisiert werden, wobei zumindest ein Teil der Monomere auf den Kautschuk polymerisiert wird.

Die erfindungsgemäße Acrylatkautschukkomponenten sind Verbindungen vom sogenannten Kern/Mantel-Typ (beispielsweise teilchenförmige Acrylatkautschuke) die einen Kern aus vernetztem Polybutadien (vgl. EP-B-34748) enthalten. Die bevorzugte Herstellung der Pfropfprodukte auf Basis von Acrylatkautschuken erfolgt durch Emulsionspolymerisation, wobei in Emulsionsform, vorliegende, zumindest teilweise vernetze Acrylatkautschuke vom Kern/Mantel-Typ als Pfropfgrundlage eingesetzt werden.

Geeignete Acrylatkautschuke sind z.B. Polymerisate auf Basis von Acrylsäure-$C_1$-$C_8$-alkylester (z.B. Methyl-, Butyl-, Octyl- oder 2-Ethylhexylester der Acrylsäure) gegebenenfalls in Mischung mit bis zu 40 Gew.-% anderen Vinylmonomeren.

Zur Vernetzung der Acrylatkautschuke werden polyfunktionelle Monomere copolymerisiert. Beispiele sind: Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure, mit einem ungesättigten Alkohol, Triallylcyanurat, Triallylisocyanurat, Divinylverbindungen wie Divinylbenzol; Ester ungesättigter Carbonsäuren mit ungesättigten Alkoholen wie Allylmethacrylat; Phosphorsäureester, beispielsweise Triallylphosphat und 1,3,5-Triacrylolylhexahydro-s-triazin. Besonders bevorzugte polyfunktionelle Monomere sind Triallylcyanurat, Triallylisocyanurat, Triallylphosphat, Allylmethacrylat, Ethylenglykolmethacrylat und 1,3,5-Triacryloylhexahydro-s-triazin.

Die Menge der zur Vernetzung benutzen polyfunktionellen Monomeren ist bevorzugt 0,05 bis 10 Gew.-%, insbesondere 0,1 bis 5,0 Gew.-% (bezogen auf Gesamtmenge vernetzten Acrylatkautschuk).

Die Pfropfpolymerisation ist nach bekannten Methoden möglich, vorzugsweise wird sie bei Temperaturen von 30 °C bis 100 °C unter Verwendung radikalischer Initiatoren beispielsweise organische oder organischer Peroxide, anorganischer Persulfate, z.B. Kaliumpersulfat, Azoinitiatoren, z.B. Azobisisobutyronitril, sowie Redox-Systemen, die aus einem Oxidationsmittel, vorzugsweise einem Peroxid, und einem Reduktionsmittel bestehen, und gegebenenfalls unter Zusatz von wäßriger Emulgatorlösung (z.B. anionische oder nichtionische Emulgatorkomponenten, vorzugsweise Natrium-, Kalium oder Ammoniumsalze langekettiger Carbonsäuren mit 10 bis 20 C-Atomen, z.B, Kaliumoleat, Alkylsulfate mit 10 bsi 20 C-Atomen, Alkylsulfonate mit 10 bis 20 C-Atomen oder Alkali- bzw. Ammoniumsalze der disproportionierten Abietinsäure) durchgeführt. Dabei kann die Reaktion diskontinuierlich (Batch- oder Semi-Batch-Verfahren), kontinuierlich oder in sonstiger Weise (z.B. Zulaufverfahren) durchgeführt werden.

Außer durch Emulsionspolymerisation ist die Herstellung der Pfropfprodukte prinzipiell auch durch Suspensions-, Lösungs- oder Massepolymerisation sowie Kombinationen dieser Verfahren in an sich

bekannter Weise möglich.

Die Pfropfprodukte auf Basis von Acrylatkautschuken weisen einen Kautschukgehalt von 40 bis 85 Gew.-% auf, bevorzugt von 40 - 60 Gew.-%. Die mittleren Teilchendurchmesser ($d_{50}$-Werte des Acrylatkautschuks betragen 0,05 bis 1,00 µm, vorzugsweise 0,08 bis 0,15 µm oder 0,30 bis 0,60 µm.

Die zur Erzeugung der erfindungsgemäßen Formmassen verwendbaren Produkte B.2 auf Basis von Silikonkautschuk werden erhalten, indem Vinylmonomere oder Vinylmonomergemische in Gegenwart von Silikonkautschuk, insbesondere in Gegenwart von in Emulsionsform vorliegenden Silikonkautschuk radikalisch polymerisiert werden, wobei zumindest ein Teil der Monomere auf den Kautschuk aufgepfropft wird (Pfropfpolymerisation).

Der Silikonkautschuk als Pfropfgrundlage zur Herstellung des Pfropfcopolymeren enthält vorzugsweise:

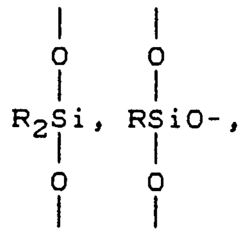

$R_3SiO$- und

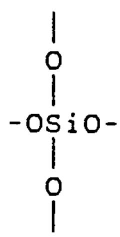

($R_2SiO$); ($RSiO_{3/2}$); ($R_3SiO_{1/2}$); ($SiO_2$)

wobei R einen einwertigen organischen Rest darstellt.

Die Mengen der einzelnen Siloxaneinheiten sind dabei so bemessen, daß auf 100 Mol Einheiten der Formel $R_2SiO$; Null bis 10 Mol Einheiten der Formel $RSiO_{3/2}$; Null bis 1,5 Mol Einheiten $R_3SiO_{1/2}$ und Null bis 3 Mol Einheiten der Formel $SiO_2$ vorhanden sind.

R kann ein einwertiger gesättigter Kohlenwasserstoffrest mit 1 bis 18 Kohlenstoffatomen, der Phenylrest oder ein Alkoxyrest oder eine radikalisch angreifbare Gruppe wie ein Vinyl- oder γ-Mercaptopropylrest sein, Bevorzugt ist, daß mindestens 80 % aller Reste R Methyl sind; insbesondere bevorzugt sind Kombinationen aus Methyl und Ethyl.

In den Gruppen $R_3SiO_{1/2}$ - den Endgruppen des Silikonkautschuks - kann einer der drei organischen Reste eine Hydroxylgruppe darstellen, Besonders bevorzugte Endgruppe ist die Dimethylhydroxysiloxyeinheit, Die Silikonkautschuke enthalten vorzugsweise gleichzeitig folgende Gruppen a) und b):

b) Vinyl- oder Allylgruppen

c) Chloralkyl- oder Mercaptogruppen

in einer Gesamtmenge von 2 bis 10 Mol-%, bezogen auf die Gesamtheit aller Reste R. Das molare Verhältnis von a) zu b) ist dabei von 3:1 bis 1:3, vorzugsweise 2:1 bis 1:2. Gruppe b) ist vorzugsweise über Mercaptopropyl eingebaut.

Die Silikonkautschuke sind teilchenförmig und besitzen mittlere Teilchendurchmesser ($d_{50}$-Werte) von 0,09 -1 µm, insbesondere 0,09 - 0,4 µm; sie sind wenigstens teilvernetzt, d.h. sie besitzen Gelgehalte von größer 50 Gew.-%, besonders größer 70 Gew.-%, besonders bevorzugt im Bereich von 73 -98 Gew.-%-. Die in Emulsionsform vorliegenden, zumindest teilweise vernetzte Silikonkautschuke werden als Pfropfgrundlage eingesetzt.

Die Pfropfpolymerisation ist nach bekannten Methoden möglich, vorzugsweise wird sie bei Temperaturen von 30 °C bis 100 °C unter Verwendung radikalischer Initiatoren, beispielswiese organischer oder anorganischer Peroxide, anorganischer Persulfate, z.B. Kaliumpersulfat, Azoinitatoren, z.B. Azobisisobutyronitril, sowie Redox-Systemen, die aus einem Oxidationsmittel, vorzugsweise einem Peroxid, und einem Reduktionsmittel bestehen, und gegebenenfalls unter Zusatz von wäßriger Emulgatorlösung (z.B. anionische

oder nichtionische Emulgatorkomponenten, vorzugsweise Natrium-, Kalium- oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure) durchgeführt. Dabei kann diskontinuierlich (Batch- oder Semi-Batch-Verfahren), kontinuierlich oder in sonstiger Weise (z.B. Zulaufverfahren) polymerisiert werden.

Außer durch Emulsionspolymerisation ist die Herstellung der Pfropfprodukte prinzipiell auch durch Suspensions-, Lösungs- oder Massepolymerisation sowie Kombination dieser Verfahren in an sich bekannter Weise möglich.

Die Pfropfprodukte auf Basis von Silikonkautschuken weisen einen Kautschukgehalt von 40 bis 85 Gew.-% auf, bevorzugt von 40 bis 60 Gew.-%. Die mittleren Teilchendurchmesser ($d_{50}$-Werte des Acrylatkautschuks betragen 0,05 bis 1,00 µm, vorzugsweise 0,08 bis 0,15 µm oder 0,30 bis 0,60 µm.

Besonders bevorzugte Silikonpfropfpolymerisate B im Sinne der Erfindung sind teilchenförmige Pfropfpolymerisate aus einem Kern, der einen vernetzten Silikonkautschuk darstellt, einer ersten Hülle, die einen vernetzten Acrylatkautschuk darstellt und einer zweiten Hülle, die ein Polymerisat oder Copolymerisat von harzbildenden Vinylmonomeren darstellt. Dabei liegt das Verhältnis vom Kern zur ersten Hülle im Bereich von 90:10 bis 50:50; die zweite Hülle besteht aus Homo- oder Copolymerisat von Monomeren bei Styrol, α-Methylstyrol, Acrylnitril, $C_1$-$C_6$-Alkylmethacrylat oder $C_1$-$C_3$-Carbonsäurevinylester. Das Material des Kern ist ein vernetzter Silikonkautschuk wie oben beschrieben.

Die erste Hülle stellt einen vernetzten Acrylatkautschuk dar und ist insbesondere ein vernetztes Polymerisat aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$-$C_8$-Alkylestern, beispielsweise Methyl-, Ethyl-, Butyl-, Octyl- und 2-Ethylhexylester, Halogenalkylester, bevorzugt $C_1$-$C_8$-Halogenalkylester, wie Chlorethylacrylat. Sie können einzeln oder in Mischung eingesetzt werden. Zur Vernetzung werden polyfunktionelle Monomere copolymerisiert. Beispiele sind: Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol, Triallylcyanurat, Triallylisocyanurat; Divinylverbindungen wie Divinylbenzol; Ester ungesättigter Carbonsäuren mit ungesättigten Alkoholen wie Allylmethacrylat; Phosphorsäureester, beispielsweise Triallylphosphat und 1,3,5-Triacryloyl-hexahydro-s-triazin. Besonders bevorzugte polyfunktionelle Monomere sind Triallylcyanurat, Triallylisocyanurat, Triallylphosphat, Allylmethacrylat.

Die Menge der zur Vernetzung benutzten polyfunktionellen Monomere ist bevorzugt 0,05 bis 5,0 Gew.-% der Masse der ersten Hülle. Das Elastomer der ersten Hülle kann zusätzlich noch ein copolymerisierbares Monomer oder mehrere solcher Monomere vom Vinyl- oder Vinylidentyp einpolymerisiert enthalten. Beispiele sind: Methylmethacrylat, Butylmethacrylat, Acrylnitril, Styrol, α-Methylstyrol, Acrylamide, Vinylalkylether. Diese Comonomere können in Mengen bis zu 40 Gew.-% des Polymerisats einpolymerisiert werden.

Die zweite Hülle stellt ein pfropfpolymerisiertes Polymerisat aus harzbildenden α-β-ungesättigten, radikalisch polymerisierbaren Monomeren dar, insbesondere aus der Reihe α-Methylstyrol, Styrol, Acrylnitril, Alkylmethacrylate mit bis zu 6 C-Atomen im Alkoholteil, Vinylacetat, Vinylchlorid. Besonders bevorzugt sind Copolymerisate aus wenigstens zwei Monomeren aus der Reihe Styrol, α-Methylstyrol, Acrylnitril und Alkylmethacrylat.

Die erfindungsgemäß bevorzugt geeigneten Pfropfpolymerisate werden wie folgt hergestellt:

In einer ersten Stufe wird eine Emulsion des Kernmaterials hergestellt:

Die Herstellung einer Emulsion eines langkettigen, OH-terminierten Silikonöls durch Emulsionspolymerisation ist z.B. in US-PS 2 891 910 und in GB-PS 1 024 024 beschrieben. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert. Dementsprechend kann die Emulsionsmittelkonzentration gering gehalten werden. Anstelle der genannten Alkylbenzolsulfonsäuren können auch auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen. Derartige Co-Emulgatoren ionischer oder nichtionischer Natur sind bekannt.

Im allgemeinen sind solche Silikonöle, die durch Emulsionspolymerisation in Anwesenheit von nichtionischen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Silikonöls erfolgt z.B. weiterhin über die Temperatur (bezüglich Einzelheiten zum Zusammenhang zwischen Temperatur und Molekulargewicht wird auf die Arbeit von Dr. Weyenberg et. al., J. Polymer Sci. Part C, 27, pp 27-34 (1969) verwiesen).

Der Einbau der oben genannten zusätzlichen Gruppen in das Silikoncopolymer kann durch Arbeiten in Anwesenheit geeigneter substituierter Siloxanoligomere erfolgen. Geeignete Ausgangsoligomere sind z.B. Tetramethyltetravinylcyclotetrasiloxan und $\gamma$-Mercaptopropropyl-methyldimethoxysilan oder dessen Hydrolysat.

Diese funktionellen Oligomere können dem Basisoligomer zur Copolymerisation in den gewünschten Mengen beigefügt werden.

Analog kann auch der Einbau längerkettiger Alkylreste R, wie z.B. Ethyl-, Propyl- oder dergleichen bzw. der Einbau von Phenylgruppen erreicht werden.

Die Silikonpfropfgrundlage muß wenigstens teilweise vernetzt sein, was durch Vernetzung bewirkende Silane oder Vinyl- und SH-Gruppen erfolgen kann.

Bevorzugt sind Silikonpfropfgrundlagen mit Gelgehalten (als Maß für die Vernetzung) von größer 75 Gew.-%, gemessen in Toluol bei Raumtemperatur.

Der Einbau von Verzweigungen oder Vernetzungen kann durch Zugabe von z.B. Tetraethoxysilan oder eines Silans der allgemeinen Formel $RSiX_3$, wobei X eine hydrolysierbare Gruppe, insbesondere den Alkoxyrest darstellt, erfolgen. R hat die im Vorhergehenden beschriebene Bedeutung. Bevorzugt sind R = Methyl und R = Phenyl. Inbesondere bevorzugt sind neben Tetramethoxysilan, Methyltrimethoxysilan oder Phenyltrimethoxysilan.

In der zweiten Stufe des erfindungsgemäßen Verfahrens wird in Gegenwart des Silikonkautschuklatex der ersten Stufe, durch Emulsionspolymerisation der Acrylatkautschuk für die erste Hülle hergestellt, indem man die Monomere (Hauptbestandteil wenigstens ein Acrylat) in dem Latex emulgiert und in an sich bekannter Weise mit radikalbildenden Initiatoren polymerisiert. Der Acrylatkautschuk polymerisiert auf den Silikonkautschuk. Er wird durch Mitwendung polyfunktioneller Monomere bereits bei der Herstellung vernetzt.

Bei der Polymerisation der ersten Hülle muß die Bildung neuer Teilchen möglichst vollständig unterbunden werden. Ein Emulsionsstabilisator muß in zur Oberflächenbedeckung der Teilchen erforderlichen Menge vorhanden sein. Die Größe dieser Teilchen ist durch die Reaktionsführung bei der Herstellung der Silikonkautschukgrundlage in weiten Grenzen zu variieren.

Nach Beendigung der Polymerisation des Acrylatkautschuks wird auf den erhaltenen Latex ein Vinylmomomer oder ein Gemisch aus Vinylmonomeren in Emulsion polymerisiert. Dabei bilden sich die erfindungsgemäßen Pfropfpolymerisate unter Ausbildung der zweiten Hülle (Pfropfhülle). Bei dieser an sich bekannten Pfropfpolymerisation, die üblicherweise in Gegenwart von Radikalstartern, z.B. wasserlöslichen Initiatoren, Emulgatoren oder Komplexbildner/Pfropfaktivatoren, sowie Reglern durch geführt wird, bilden sich im allgemeinen neben dem Pfropfpolymerisat in bestimmtem Ausmaß freie Polymerisate bzw. Copolymerisate der die zweite Hülle bildenden Monomeren. Die Menge dieses ungepfropften Polymerisats kann durch Pfropfgrad bzw die Pfropfausbeute charakterisiert werden, sie hängt ab u.a. von den Polymerisationsbedingungen, der Zusammensetzung der ersten Hülle, der Größe der zu pfropfenden Teilchen und der Menge an gepfropftem Acrylatkautschuk. "Pfropfpolymerisat" im Sinne der Erfindung ist deshalb das durch Polymerisation von Vinylmonomeren in Gegenwart des Kautschuklatex erhaltene Produkt, genaugenommen also ein Gemisch aus Pfropfpolymerisat und freiem Copolymerisat der Pfropfmonomere.

Die so hergestellten Pfropfpolymerisate können nach bekannten Verfahren aufgearbeitet werden, z.B. durch Koagulation der Latices mit Elektrolyten (Salze, Säuren oder Gemisch davon) und anschließende Reinigung und Trocknung.

Die Herstellung der erfindungsgemäßen thermoplastischen Zusammensetzungen kann z.B. so erfolgen, daß man die beiden Komponenten A) und b) gemäß Stand der Technik getrennt hergestellt und dann - gegebenenfalls unter Mitverwendung der erwähnten Zusatzmittel - trocken vermischt ("dry-blending). Für das dry-blending eignen sich z.B. die üblichen Innenmischer und Extruder.

Alternativ ist es jedoch möglich, die Umsetzung der polyurethanbildenen Komponenten bereits in Gegenwart des Pfropfkautschuks und gegebenenfalls der obengenannten Zusatzmittel ablaufen zu lassen. Besonders vorteilhaft ist es, für diesen Zweck eine Reaktionsschneckenmaschine einzusetzen, wie sie z.B. in US-PS 3 233 025, US-PS 3 624 964, DE-OS 24 47 368, DE-AS 26 10 980 und insbesondere DE-AS 23 02 564 und 25 49 372 (US-PS 3 963 679) beschrieben werden. Die polyurethanbildenden Komponenten werden dabei (entweder bereits vorvermicht oder auch getrennt) an einer oder mehreren Stellen, gegebenenfalls auch in mehrere Portionen gesplittet, in die Schneckenmaschine eingebracht und der Pfropfkautschuk an einer beliebigen Stelle der Schnecke zudosiert. Es kann dabei oft vorteilhaft sein, den Pfropfkautschuk in der Schnecke vorzulegen, auf- bzw. anzuschmelzen und dann erst über weitere Einspeisstellen die polyurethanbildenen Komponenten zuzudosieren. In diesem Falle kann auf die speziellen Knetelemente verzichtet werden, wie sie für das Verfahren der US-PS 3 963 679 erforderlich sind.

Die erfindungsgemäßen Formmassen zeichnen sich gegenüber den Ausgangspolyurethanen durch eine erhöhte Weichheit, verbesserte Reißdehnung und Kältezähigkeit aus. Überraschenderweise besitzen die acrylatkautschukhaltigen Blends selbst bei -40 °C noch verbesserte Zähigkeitswerte. Unverträglichkeitserscheinungen, die sich beispielsweise durch einen Abfall der Reißdehnung oder durch Formkörperoberflächenstörungen (Schlieren) zeigen würden, werden nicht beobachtet. Im Vergleich zu bekannten, mit Pfropfkautschuken auf Polybutadienbasis modifizierten Polyurethanen weisen die erfindungsgemäßen Formmassen ein ähnlich günstiges Eigenschaftsbild auf, besitzen jedoch aufgrund der Abwesenheit von polybutadienkautschuken eine erhebliche verbesserte Lichtstabilität (Langzeitstabilität bei Bewitterung); Überraschenderweise ist bei den erfindungsgemäßen Formmassen dem gegenüber auch die Kurzzeitwärmestabilität deutlich erhöht, diese Eigenschaft ist aber wichtig für Verarbeitungsbreite und -cyclen der Thermoplastmischungen. Die erfindungsgemäßen Formmassen weisen außerdem eine verbesserte Hydrolysebeständigkeit auf.

Beispiele

I. Verwendetes Polyurethan

Das Polyurethan wird hergestellt durch Mischung folgender Komponenten in Schneckenmaschinen bei Temperaturen von 120 - 300 °C (Angaben in Gew.-Teile).

Aa) 45,27 Teile 4,4'-Diphenylmethandiisocyanat (NCO/OH-Verhältnis = 1,03)
Ab) 14,03 Teile Butandiol-1,4
Ac) 40,1 Teile eines Adipinsäure/Butandiol-Polyesters (OH-Zahl 56)
0,2 Teile Stearylamid
0,2 Teile 2,6-Di-tert.-butyl-4-methylphenol
0,2 Teile 2,2'-6,6'-Tetraisopropyldiphenylcarbodiimid

Es wird ein Thermoplast erhalten, der folgende Eigenschaften aufweist:

| | | |
|---|---|---|
| Shore Härte D [DIN 53 505] | : | 64 |
| Reißdehnung [%] DIN 53 509 | : | 323 |
| Schlagzug-Reißdehnung (-20° C) [%] DIN 53 448 | : | 48 |
| Kerbschlagzähigkeit (-40° C) kJ/m DIN 53 453 | : | 3,1 |
| Vicattemp. Meth. A / 120° C [° C] DIN 53 460 | : | 155 |

II. Verwendete Pfropfpolymerisate

II. 1) Silikonpfropfkautschuk 38,4 Gew.-Teile Octamethylcyclotetrasiloxan, 1,2 Gew.-Teile Tetramethyltetravinylcyclotetrasiloxan und 1 Gew.-Teil γ-Mercaptopropylmethyldimethoxysilan werden miteinander verrührt. 0,5 Gew.-Teile Dodecylbenzolsulfonsäure werden zugefügt, anschließend werden 58,4 Gew.-Teile Wasser innerhalb einer Stunde zugegeben. Dabei wird intensiv gerührt. Die Voremulsion wird mit Hilfe einer Hochdruckemulgiermaschine 2 x bei 200 bar homogenisiert. Man gibt weitere 0,5 Gew.-Teile Dodecylbenzolsulfonsäure hinzu. Die Emulsion wird 2 Stunden bei 85 °C und anschließend 36 Stunden bei Raumtemperatur gerührt. Neutralisiert wird mit Hilfe von 5-n-NaOH. Es resultiert eine stabile Emulsion mit einem Feststoffgehalt von ca. 36 %. Das Polymer besitzt einen Gelgehalt von 82 Gew.-%, gemessen in Toluol, die mittlere Teilchengröße ($d_{50}$ beträgt 330 nm).

Das Pfropfpolymerisat wird erzeugt, indem man Styrol/Acrylnitril-Gemisch (Gew.-Verhältnis 72:28) in Gegenwart der obigen Emulsion radikalisch pfropfpolymerisiert (bei einer Temperatur von 70 °C und Einsatz von langkettigen Alkylsulfonat-Na-Salz als Emulgator) und anschließend die Emulsion einer Koagulation unterwirft unter Isolierung des Pfropfpolymerisatpulvers. Das Pfropfpolymerisat besteht aus 55 Gew.-% Silikongrundlage und 45 Gew.-% Styrol-Acrylnitril-Copolymerisat.

II. 2) Acrylatpfropfkautschuk

In einem Reaktor wird unter Rühren bei 65 °C folgende Mischung vorgelegt:

46 Gew.-Teile Latex eines vernetzen Polybutadiens (TG: 100 nm)

2800 Gew.-Teile Wasser
8 Gew.-Teile Kaliumsulfat

Innerhalb von 4 Stunden wurden bei 65 °C folgende Mischungen in den Reaktor getrennt eindosiert:

Mischung A: 3013 Gew.-Teile n-Butylacrylat 6,2 Gew.-Teile Triallylcyanurat

Mischung B: 2760 Gew.-Teile Wasser 41 Gew.-Teile Na-Sulfonat von $C_{14}$-$C_{18}$ Kohlenwasserstoffen

Anschließend läßt man 4 Stunden bei 65 °C auspolymerisieren. Das gebildete Polymerisat besitzt Gelgehalte von 92 Gew.-%, Quellungsgrade von 5 - 9 und mittlere Teilchendurchmesser von 320 nm.

Das Pfropfpolymerisat wird erzeugt, indem man ein Styrol/Acrylnitril-Gemisch (Gew.-Verhältnis 72:28) in Gegenwart der obigen Emulsion radikalisch pfropfpolymerisiert (bei 70 °C und und als Emulgator langkettige Alkylsulfonat-Na-Salze): anschließend wird die Emulsion einer Koagulation unterworfen unter Isolierung des Pfropfpolymerisatpulvers. Das Pfropfpolymerisat besteht aus 55 Gew.-% Acrylkautschuk und 45 Gew.-% Styrol-Acrylnitril-Copolymerisat.

II. 3) Vergleichspfropfpolymerisat analog Beispiel 1D der EP-A-00 12 416.

ABS-Pfropfpolymerisat aus 55 Gew.-Teilen eines grobteiligen Polybutadien (Teilchengröße 350 nm, Gelgehalt 90 Gew.-%) und 45 Gew.-% Pfropfastpolymerisat aus Styrol und Acrylnitril-Copolymerisat im Gew.-Verhältnis S/ACN = 72:78.

III. Herstellung der Formmassen und Formmasseeigenschaften

WET-Verfahren

Bei den Beispielen wird eine Zweiwellenschneckenknetmaschine z.B. des Typs ZSK 53 V der Fa. Werner & Pfleiderer, Stuttgart, mit selbstreinigendem Wellenbesatz und einem Knetelementanteil von ca. 20 % verwendet. Der Verfahrensteil besteht aus 12 separat heizbaren Gehäusen, die Länge des Verfahrensteils entspricht etwa dem 20-fachen Wellendurchmesser.

Die Verweilzeiten der Reaktionsschmelze in der Schneckenmaschine betragen in der Regel 0,3 bis 30, bevorzugt 0,5 bis 4 Minuten. Die Temperaturen der Schneckengehäuse liegen zwischen etwa 60 und 300 °C (ca. 80 bis 280 °C) in der Einzugszone; ca. 100 bis 300 °C in der Mitte des Extruders und ca. 120 bis 250 °C in der Austragszone. Die aus dem Extruder austretende Schmelze wird nach an sich bekannten Verfahren abgeschreckt und zerkleinert. Die Herstellung der thermoplastischen Polyurethanelastomeren erfolgt in den bei I angegebenen Gewichtsteilen, wobei die Zusammensetzung des Polyurethanelastomer bei allen Beispielen gleich ist.

Die Komponente Ac) (mit Additiven) wird aus dem 120 °C heißen Vorlagekessel über eine Zahnradpumpe in das Gehäuse 1 einer Zweiwellenknetmaschine eindosiert. Ebenfalls in das Gehäuse 1 wird über eine Zahnradpumpe das Diolgemisch Ab) mit einer Temperatur von 60 °C dosiert. Die Komponente Aa) wird mit 60 °C über eine Zahnradpumpe ebenfalls in das Gehäuse 1 gepumpt. Die kein Polyurethan enthaltenden Thermoplaste bzw. deren Gemische (Komponenten B und gegebenenfalls C-E der Ansprüche) werden über eine Schüttelrinne in die Schneckenmitte in die nicht ausreagierte Polyurethanschmelze eingebracht.

| Gehäuse | 1 | 2/3 | 4/5 | 6/7 | 8/9 | 11/12 | Kopf |
|---|---|---|---|---|---|---|---|
| Temperatur | 80° C | 200° C | 200° C | 200° C | 220° C | 200° C | 240° C |

Dry-Verfahren

Das komplett ausreagierte thermoplastische Polyurethan, Komponente A, wird über eine Schüttelrinne, in die ZSK-53 in das Gehäuse 1 eindosiert. Die kein Polyurethan enthaltenden Thermoplaste bzw. deren Gemische der Ansprüche werden über eine Schüttelrinne in die Schneckenmitte eingebracht. An der Schneckenmaschine wurde folgende Gehäusetemperaturen eingestellt:

| Gehäuse | 1 | 2/3 | 4/5 | 6/7 | 8/9 | 11/12 | Kopf |
|---|---|---|---|---|---|---|---|
| Temperatur | 80° C | 200° C | 200° C | 200° C | 220° C | 200° C | 240° C |

Die aus dem Extruder austretende Schmelze wird nach an sich bekannten Verfahren abgeschreckt und zerkleinert.

Die Zusammensetzung der erfindungsgemäßen Vergleichsformmassen sowie deren Eigenschaften sind in Tabelle 1 aufgeführt.

Die verbesserte Verarbeitungsstabilität der erfindungsgemäßen Formmassen im Vergleich zu den bekannten mit ABS modifizierten Formmassen (Vergleichsbeispiel 6) zeigt sich in der rein weißen Farbe der Prüfkörper, während die Prüfkörper der Vergleichsformmasse 6) einen leichten Gelbton aufgrund einer partiellen Schädigung bei der Verarbeitung und Prüfkörperherstellung aufweisen.

In Tabelle 2 sind überraschend hohe Hydrolysestabilitäten der Polymerkombination wiedergegeben - im Vergleich zu einem Polyurethan/ABS-Blend.

Tabelle 1 Eigenschaftsvergleich der Formmassen

| Formmasse Nr. | Poly-urethan | Pfropfkautschuk Typ/Anteil [%] | Shore Härte DIN 53 505 Typ D | Reißdehnung DIN 53 504 [%] | Schlagzug Reißdehnung DIN 53 448 bei -20$^0$C [%] | Kerbschlag-zähigkeit DIN 53 453 bei -40$^0$C [kJ/m$^2$] | Vicat-temp. Methode A DIN 53 460 | Verfahren |
|---|---|---|---|---|---|---|---|---|
| III 1 | I | II 2 / 11,5 | 56 | 432 | 74 | 6 | 135 | dry |
| III 2 | I | II 2 / 15 | 55 | 450 | 67 | 5 | 172 | dry |
| III 3 | I | II 1 / 11,5 | 55 | 411 | 52 | 8 | 139 | dry |
| III 4 | I | II 1 / 15 | 57 | 410 | 49 | 8 | 129 | dry |
| III 5 (Vergleich) | I | - / - | 64 | 323 | 48 | 3 | 155 | dry |
| III 6 (Vergleich) | I | II 3 / 11,5 | 56 | 462 | 67 | 8 | 136 | dry |
| III 7 | I | II 2 / 11,5 | 57 | 409 | 16 | 6 | n.b. | wet |
| III 8 | I | II 1 / 11,5 | 56 | 355 | 58 | 8 | n.b. | wet |

Tabelle 2 Hydrolysestabilitätsvergleich der Formmassen

| Formmasse Nr. | Polyurethan | Pfropfkautschuk Typ/Anteil [%] | Nullwert | | Hydrolysewert | | Abfall | |
|---|---|---|---|---|---|---|---|---|
| | | | Reißfestigkeit (MPa) | Reißdehnung (%) | Reißfestigkeit (MPa) | Reißdehnung (%) | Reiß-festigkeit (%) | Reißdehnung (%) |
| III 9 (Vergleich) | I | II 3 / 15 | 41,6 | 480 | 7,5 | 28 | -82 | -94 |
| III 2 | I | II 2 / 15 | 42,1 | 450 | 26,2 | 480 | -38 | + 6 |
| III 4 | I | II 1 / 15 | 35,8 | 410 | 19,1 | 370 | -47 | -10 |

## Patentansprüche

**1.** Thermoplastische, flexible Zusammensetzungen aus

A) wenigstens einem thermoplastischen Polyurethan und

B) Wenigstens einem partiell vernetztem Pfropfkautschuk auf Basis

B.1) eines Acrylatkautschuks mit Kern/Mantel-Struktur, wobei der Acrylatkautschuk aus einem Kern aus Polybutadien, einer Hülle aus Acrylatkautschuk und wenigstens einem aufgepfropften Vinylmonomeren besteht und/oder
B.2) eines Silikonkautschuks.

**2.** Zusammensetzungen nach Anspruch 1, dadurch gekennzeichnet, daß der Kautschukgehalt der Komponente B 40 bis 85 Gew. -%, bezogen auf die Komponente B beträgt.

**3.** Zusammensetzungen nach Anspruch 1, dadurch gekennzeichnet, daß die Pfropfkautschuke B aufgepfropftes Homo- oder Copolymerisat eines Vinylmonomeren enthalten.

**4.** Zusammensetzungen nach Anspruch 3, dadurch gekennzeichnet, daß die Vinylmonomeren Styrol, α-Methylstyrol, Acrylnitril, $C_1$-$C_6$-Alkylmethacrylat, $C_1$-$C_6$-Alkylacrylat oder $C_1$-$C_3$-Carbonsäurevinylester sind.

**5.** Zusammensetzungen nach Anspruch 1, dadurch gekennzeichnet, daß der Pfropfkautschuk B2) ein Silikonkautschuk mit Kern/Mantel-Struktur ist.

**6.** Zusammensetzungen nach Anspruch 1, dadurch gekennzeichnet, daß der Pfropfkautschuk B2) ein teilchenförmiger Kautschuk mit einem Silikonkautschukkern und einem Acrylatkautschukmantel ist.

**7.** Verfahren zur Herstellung von Zusammensetzungen gemäß Anspruch 1, dadurch gekennzeichnet, daß man die beiden Komponenten A und B getrennt herstellt und, gegebenenfalls unter Verwendung von Hilfsmitteln trocken vermischt.

**8.** Verfahren zur Herstellung von Zusammensetzungen gemäß Anspruch 1, dadurch gekennzeichnet, daß man die Herstellung des thermoplastischen Polyurethans A in Gegenwart des Pfropfkautschuks B und gegebenenfalls von Zusatzmitteln vornimmt.

**9.** Verwendung der Zusammensetzungen gemäß Anspruch 1 für thermoplastische, flexible Formmassen.

## Claims

**1.** Thermoplastic flexible compositions of
A) at least one thermoplastic polyurethane and
B) at least one partly crosslinked graft rubber based on
B.1) an acrylate rubber having a core-shell structure, the acrylate rubber consisting of a core of polybutadiene, a shell of acrylate rubber and at least one grafted-on vinyl monomer, and/or
B.2) a silicone rubber.

**2.** Compositions as claimed in claim 1, characterized in that the rubber content of component B is 40 to 85% by weight, based on component B.

**3.** Compositions as claimed in claim 1, characterized in that the graft rubbers B contain grafted-on homopolymer or copolymer of a vinyl monomer.

**4.** Compositions as claimed in claim 3, characterized in that the vinyl monomers are styrene, α-methyl styrene, acrylonitrile, $C_{1-6}$ alkyl methacrylate, $C_{1-6}$ alkyl acrylate or $C_{1-3}$ carboxylic acid vinyl esters.

**5.** Compositions as claimed in claim 1, characterized in that the graft rubber B2) is a silicone rubber having a core/shell structure.

**6.** Compositions as claimed in claim 1, characterized in that the graft rubber B2) is a particulate rubber having a silicone rubber core and an acrylate rubber shell.

**7.** A process for the production of the compositions claimed in claim 1, characterized in that the two components A and B are separately produced and are dry-blended, optionally using auxiliaries.

**8.** A process for the production of the compositions claimed in claim 1, characterized in that the thermoplastic polyurethane A is produced in the presence of the graft rubber B and, optionally, additives.

**9.** The use of the compositions claimed in claim 1 for thermoplastic, flexible moulding compounds.

**Revendications**

**1.** Compositions thermoplastiques souples consistant en
   A) au moins un polyuréthanne thermoplastique et
   B) au moins un caoutchouc greffé partiellement réticulé à base de
      B.1) un caoutchouc d'acrylate à structure en noyau/enveloppe, le caoutchouc d'acrylate consistant en un noyau de polybutadiène, une enveloppe de caoutchouc d'acrylate et au moins un monomère vinylique greffé et/ou
      B.2) un caoutchouc de silicone.

**2.** Compositions selon la revendication 1, caractérisées en ce que la teneur en caoutchouc du composant B est de 40 à 85 % du poids de ce composant.

**3.** Compositions selon la revendication 1, caractérisées en ce que les caoutchoucs greffés B contiennent un homo- ou co-polymère greffé d'un monomère vinylique.

**4.** Compositions selon la revendication 3, caractérisées en ce que les monomères vinyliques sont le styrène, l'$\alpha$-méthylstyrène, l'acrylonitrile, un méthacrylate d'alkyle en $C_1$-$C_6$, un acrylate d'alkyle en $C_1$-$C_6$ ou un ester vinylique d'acide carboxylique en $C_1$-$C_3$.

**5.** Compositions selon la revendication 1, caractérisées en ce que le caoutchouc greffé B2) est un caoutchouc de silicone à structure en noyau/enveloppe.

**6.** Compositions selon la revendication 1, caractérisées en ce que le caoutchouc greffé B2) est un caoutchouc en particules à noyau de caoutchouc de silicone et enveloppe de caoutchouc d'acrylate.

**7.** Procédé de préparation des compositions selon la revendication 1, caractérisé en ce que l'on prépare séparément les deux composants A et B puis on les mélange à sec, le cas échéant en utilisant des produits auxiliaires.

**8.** Procédé de préparation des compositions selon la revendication 1, caractérisé en ce que l'on prépare le polyuréthanne thermoplastique A en présence du caoutchouc greffé B et le cas échéant d'additifs.

**9.** Utilisation des compositions selon la revendication 1 dans des matières à mouler thermoplastiques souples.